# EUROPÄISCHE PATENTSCHRIFT

(11) **EP 3 806 698 B1**
(45) Veröffentlichungstag und Bekanntmachung des Hinweises auf die Patenterteilung: **23.10.2024**
(21) Anmeldenummer: 19708125.0
(22) Anmeldetag: 07.03.2019
(51) Int. Cl.: A47G 9/10, A47D 15/00, A61F 5/00, A61F 5/37, A61F 5/058, B60N 2/28, A47C 7/38, A61G 7/07, A61F 5/01

(54) **FORMKÖRPER ZUR LAGERUNG EINES MENSCHLICHEN KOPFES**
SHAPED BODY FOR SUPPORTING A HUMAN HEAD
CORPS MOULÉ DESTINÉ À SUPPORTER UNE TÊTE HUMAINE

(30) Priorität: 13.06.2018 EP 18177627
(43) Veröffentlichungstag der Anmeldung: 21.04.2021
(73) Patentinhaber: Kluba Medical GmbH, 40223 Düsseldorf (DE)
(72) Erfinder: KLUBA, Susanne, 01468 Moritzburg (DE)
(74) Vertreter: König Szynka Tilmann von Renesse Patentanwälte Partnerschaft mbB Düsseldorf
(86) Internationale Anmeldenummer: PCT/EP2019/055745
(87) Internationale Veröffentlichungsnummer: WO 2019/238281

(56) Entgegenhaltungen:
- FR-A1- 2 837 437
- US-A- 4 617 691
- US-A- 6 042 184
- US-A1- 2010 242 180
- US-A1- 2012 073 058
- US-B1- 6 266 832

## Beschreibung

Die vorliegende Erfindung betrifft einen Formkörper zur Lagerung oder Stütze eines menschlichen Kopfes, insbesondere eines Kopfes von Säuglingen.

Zwei häufige Schädelverformungen sind die Plagiozephalie und die Brachyzephalie. Es sind verbreitete Phänomene insbesondere bei Säuglingen (Babys) und Kleinkindern. Sie können, wenn auch seltener, noch im Erwachsenenalter bestehen. Häufig können auch Mischformen auftreten.

Von einer Plagiozephalie (oft auch als ,Schiefschädel' bezeichnet) wird gesprochen, wenn die Kopfform asymmetrisch und schief ist. Je nach Schwere können zusätzlich aber auch ein Schiefstand der Ohren, ein asymmetrisches Gesicht oder ein nach oben ansteigender Hinterkopf beobachtet werden.

Eine Brachyzephalie (auch ,Plattkopf' genannt) ist die Bezeichnung für einen Kurzschädel, bei dem das Verhältnis von Kopflänge zu Kopfbreite gestört ist. Der Kopf ist am Hinterhaupt beidseitig abgeflacht. Auch bei dieser Form kann es bei schwerer Ausprägung zu einem nach oben ansteigenden Hinterkopf kommen.

Schädelverformungen können verschiedene Entstehungsgründe und Ausprägungen haben. Am weitaus häufigsten sind die lagebedingten Schädeldeformitäten zu beobachten.

Bereits im Mutterleib können Verformungen entstehen, z. B. bei einer längeren beengten Lage im kleinen Becken. Auch Mehrlingsschwangerschaften (z. B. Zwillinge) sind aufgrund der engen Platzverhältnisse im Mutterleib ein Risikofaktor für die Entstehung einer Schädeldeformation. Ebenso können schwierige Geburtsvorgänge, z. B. durch Saugglocke oder Zange, eine Schädelverformung begünstigen.

Auch nach der Geburt und bei zunächst normal ausgeformtem Kopf kann das Risiko für die Entwicklung einer Schädelverformung bestehen, da Säuglinge gerade in den ersten Lebenswochen und -monaten noch wenig mobil sind und häufig und lange liegen. Verstärkt wird dieses Risiko durch die ärztlich empfohlene Rückenlage des Säuglings. Diese wird von Ärzten und Hebammen als wichtige Maßnahme zur Vermeidung des plötzlichen Kindstods insbesondere deshalb empfohlen, weil sich die Neugeborenen aus der Rückenlage nicht oder nur sehr schwer in die potentiell gefährliche Bauchlage bewegen können. Wenn der Kopf des Säuglings überwiegend auf derselben Stelle ruht, muss genau diese Stelle immer wieder einer erhöhten Druckbelastung standhalten. Da der Schädelknochen in den ersten Lebensmonaten noch weich und empfindlich ist, kann er durch diese Belastung leicht seine natürliche rundliche Form verlieren.

Viele Säuglinge bevorzugen zudem eine bestimmte Blickrichtung und nehmen daher häufig eine bevorzugte Kopflage ein. Sie fallen auch im Schlaf bzw. in Rückenlage immer wieder in diese Position zurück. Dieser Effekt verstärkt sich, wenn bereits eine Abflachung bzw. Asymmetrie des Schädels vorhanden ist. In den ersten Lebenswochen kann das Kind diese Position nur schwer oder gar nicht selbständig überwinden. Erst mit zunehmender körperlicher und muskulärer Stärkung und Mobilität verringert sich die Gefahr einer längeren, gleichbleibenden Liegeposition und damit das Risiko für Schädelverformungen.

Darüber hinaus können auch Muskelverspannungen oder -verkürzungen sowie Blockaden beim Kind eine einseitige Schlaf- und Liegeposition begünstigen und zu einer Kopfverformung führen.

All diese Faktoren können zu einer mehr- oder minderschweren asymmetrischen oder symmetrischen Kopfdeformität führen, die ggf. auch weitere Regionen wie z. B. das Gesicht oder die Ohren betreffen kann. Besonders oft sind ein abgeflachter Hinterkopf oder eine seitliche Abflachung zu beobachten. Als therapeutische Maßnahmen kommen Lagerung, Physiotherapie, Osteopathie oder - in ausgeprägten Fällen - die Helmtherapie in Betracht.

Deutlich seltener kommen auch vorzeitige Schädelnahtverschlüsse als Ursache für Kopfdeformitäten in Frage. In diesen Fällen sind eine bzw. mehrere (bei Neugeborenen eigentlich noch offene) Schädelnähte zu früh verknöchert. Der normale Wachstumsdruck durch das Gehirn kann dann nicht zu einem in alle Richtungen gleichförmigen Schädelwachstum führen, sondern der Kopf breitet sich zum Ausgleich vermehrt in die nicht verschlossenen Richtungen aus. Dies wiederum bedingt ebenfalls eine Kopfverformung. Je nach Ausprägung kann hier eine operative Therapie in Frage kommen.

Bei Erwachsenen kann insbesondere in Fällen von längerer Bettlägerigkeit oder bei Behinderungen oder Erkrankungen, die die Kontrolle der Körper- oder Kopfhaltung erschweren, das Erfordernis bestehen, den Kopf in einer definierten Position zu lagern oder die Lagerung des Kopfes von außen zu steuern. Die gezielte Lagerung des Kopfes kann auch der Unterstützung anderer medizinischer Maßnahmen dienen, so z. B. die Stabilisierung der Kopflage bei künstlicher Beatmung eines Patienten. Darüber hinaus kann eine Lagerung des Kopfes auch ein bequemeres Liegen ermöglichen und daher vorteilhaft sein. Die Lagerung des Kopfes kann auch der Stützung und Entlastung des Kopfes dienen. So können zum Beispiel Druckstellen am Kopf und/oder Verspannungen im Kopf-/Halsbereich verringert oder gänzlich vermieden werden.

Im Stand der Technik sind Kissen zur Lagerung des Kopfes bekannt, die eine Mulde aufweisen, die zur Unterlage hin (bodenseitig) durch eine elastische Membran abgeschlossen ist. In dieser Mulde wird der Hinterkopf gelagert, so dass er sich auf der elastischen Membran abstützt. In dieser Vorrichtung ist der Kopf aber nicht ausreichend sicher und stabil gelagert, weil das Risiko besteht, dass der Kopf bei einer Bewegung aus der Mulde herausrutscht.

Aus der DE 20 2008 006 818 U1 ist eine Kopfschale bekannt, die außen- und innenseitig symmetrisch abgerundet ausgebildet ist. Diese Kopfschale weist eine konstante Dicke auf und ist innenseitig an die Hinterkopfkrümmung angepasst. Diese Vorrichtung ist jedoch zu starr und kann dem lokal erhöhten Druck durch Auflage des Kopfes nicht ausreichend flexibel nachgeben.

Aus der FR 2 859 615 A1 ist ein Säuglingskissen bekannt, welches eine geschlossene, kreisförmige Aussparung zur Auflage eines Kopfes enthält. Der Durchmesser der kreisförmigen Aussparung ist starr und erlaubt nur eine geringe Bewegungsfreiheit des Kopfes.

Aus der DE 10 2009 037 159 (A1) ist ebenfalls ein Lagerungsring speziell für den Kopf von Säuglingen bekannt. Dieser weist einen ringförmigen Grundkörper auf. Der Querschnitt des Grundkörpers ist im unbelasteten Zustand im Wesentlichen kreisförmig. Bei Auflage des Kopfes ist die Druckverteilung nicht optimal.

FR 2 837 437 A1 offenbart einen Formkörper gemäß dem Oberbegriff des Anspruchs 1.

Aufgabe der vorliegenden Erfindung ist es daher, einen Formkörper bereitzustellen, der eine verbesserte Lagerung des Kopfes, insbesondere des Kopfes eines Säuglings, ermöglicht. Insbesondere soll eine Lagerung ermöglicht werden, die ausreichend stabil und sicher sowie für den Anwender angenehm und bequem ist. Damit soll möglichst das Risiko lagebedingter Deformationen des Schädels reduziert werden. Ferner ist es Aufgabe gerade bei Säuglingen, vorgeburtlichen oder geburtlichen Schädeldeformationen entgegenzuwirken.

Erfindungsgemäß wird diese Aufgabe durch die Bereitstellung eines Formkörpers nach Anspruch 1 gelöst. Vorteilhafte Weiterentwicklungen sind Gegenstand entsprechender Unteransprüche. Ebenso wird die Aufgabe durch den unabhängigen Verwendungsanspruch zum Stützen und/oder Lagern eines Schädels, insbesondere zur Prävention und/oder zur Behandlung von lagebedingten Verformungen des Schädels, insbesondere des Schädels von Säuglingen, gelöst.

Der erfindungsgemäße Formkörper weist einen im Wesentlichen ringförmigen, vorzugsweise geöffneten Formkörper auf, wobei zumindest in einem Teilbereich die Kontur des Querschnitts des Formkörpers eine geneigte halbe Ellipse umfasst. Die Neigung der Ellipse ist bezogen auf eine (fiktive) Auflageebene, auf der der Formkörper im Wesentlichen plan aufliegt. Für den erfindungsgemäßen Formkörper ist zumindest in einem Teilbereich die Kontur des

Querschnitts des Formkörpers asymmetrisch und weist eine konvexe Auflagefläche auf.

Die Auflagefläche bezeichnet diejenige Fläche des Formkörpers, welche im

Wesentlichen nach innen, d. h. in Richtung des Zentrums des Formkörpers zeigt oder zu diesem geneigt ist und auf welcher der Kopf aufliegt. Die Auflagefläche ist im Allgemeinen an die Kopfform angepasst.

Der Kern der Erfindung besteht darin, dass durch die flache Neigung der Auflagefläche des Formkörpers die effektive Fläche des Formkörpers, an der der Kopf anliegt, gerade bei zunehmendem Druck deutlich zunimmt und die damit auf den Kopf einwirkenden Druckkräfte bei einer komfortablen Bewegungsfreiheit besser verteilt werden.

Erfindungsgemäß weist ein Teil der Kontur des Querschnitts die Form einer halben Ellipse auf. Vorzugsweise weist derjenige Bereich der Kopfstütze die Form einer Ellipse auf, welcher mit dem Kopf in Berührung kommt (Auflagefläche). Im Speziellen ist die Auflagefläche abgeflacht und/oder derart abgerundet, dass die äußere Kontur der Querschnittsfläche die Form einer halben Ellipse aufweist. Die große Halbachse verläuft im Wesentlichen parallel zu einer

Tangente, welche an der Stelle liegt, an der der Kopf die Auflagefläche berührt. Hierzu ist die Ellipse gekippt oder geneigt gegenüber einer Ebene, welche im Wesentlichen parallel zur Auflageebene verläuft, auf der der Formkörper im Wesentlichen plan aufliegt.

Erfindungsgemäß ist die Kontur des Querschnitts des Formkörpers asymmetrisch und weist somit insbesondere keine Achsensymmetrie oder Spiegelachse auf. Ferner weist die Kontur des Querschnitts des Formkörpers eine im Wesentlichen konvexe, d. h. nach außen gekrümmte Auflagefläche auf. Hierdurch wird insbesondere sichergestellt, dass eine ausreichende Bewegungsfreiheit besonders in Bereichen mit geringem Druck vorhanden ist.

Mit dem erfindungsgemäßen Formkörper kann der Kopf bei gleichzeitig großem

Bewegungsfreiraum möglichst druckentlastet gelagert werden, so dass die Gefahr einer Druckstelle und/oder Verformung des aufliegenden Schädelteils durch eine ungewollte und unkontrollierte Druckbelastung durch die Unterlage, auf der der Formkörper liegt, reduziert wird. Dies gilt sowohl für Säuglinge als auch für erwachsene Patienten.

Ferner ergibt sich durch die besondere Geometrie des erfindungsgemäßen Formkörpers bei der Lagerung des Kopfes automatisch ein Zentrierungseffekt im Hinblick auf die Position des Kopfes. Dieser ist nicht nur durch die im Wesentlichen ringförmige Grundstruktur des Formkörpers bedingt, sondern auch durch die gegebene Neigung der Auflagefläche des Kopfes. Der Kopf rutscht durch diese Neigung quasi automatisch in Richtung des Mittelpunkts des ringförmigen Formkörpers. Dies ist insbesondere bei einer schiefen Unterlage vorteilhaft.

Vorteilhafterweise erlaubt die geöffnete Ringform des Formkörpers aufgrund der freien Enden des Rings eine individuelle Anpassung an die Kopfform und -größe des Nutzers. Diese kann entweder dazu genutzt werden, eine möglichst gleichmäßige Druckbelastung an allen Bereichen des Schädels zu erreichen, oder aber - insbesondere im Falle der Behandlung von Schädeldeformationen - die gezielte Druckbelastung und -entlastung an bestimmten Bereichen des Schädels.

Unter einem ,Formkörper' wird ein Körper verstanden, welcher seine Form unter Ausübung von geringen mechanischen Kräften im Wesentlichen beibehalten oder wiedererlangen kann. Der Formkörper ist vorzugsweise elastisch.

Unter dem ,Querschnitt' eines Formkörpers wird ein Schnitt durch eine Längsachse des Formkörpers verstanden, welcher in einer Ebene senkrecht zur wesentlichen Längserstreckung des Formkörpers verläuft. Unter dem Querschnitt eines im Wesentlichen ringförmigen Formkörpers wird ein Schnitt durch den Formkörper verstanden, welcher in einer Ebene radial zu seinem Symmetriezentrum und senkrecht zur Rotationsebene verläuft.

Unter der ,Kontur' eines Querschnitts wird insbesondere die äußere Linie des Querschnittes oder der Querschnittsfläche verstanden, welche die Querschnittsfläche umgibt oder umfasst.

Unter ,ringförmig' oder einer ,Ringform' wird eine zumindest abschnittweise kreisförmige Grundstruktur mit einem Mittelpunkt verstanden. Eine ringförmige Form kann vorzugsweise dadurch erhalten werden, dass eine abgeschlossene Fläche um einen Punkt außerhalb der abgeschlossenen Fläche rotiert wird (Rotationskörper).

Der Begriff im Wesentlichen ringförmig' im Sinne der Erfindung bezieht sich auf einen Ring mit einem variierenden Rotationsradius. Der Rotationsradius kann z. B. derart variieren, dass der Ring oder der geöffnete Ring ein Oval bildet.

In einer bevorzugten Ausführungsform ist der Formkörper geöffnet und weist ein erstes Ende und ein zweites Ende auf. Im Besonderen verringert sich der mittlere Durchmesser des Querschnitts des Formkörpers zu den Enden hin. Hierdurch werden insbesondere Kanten oder Bereiche mit relativ geringem Krümmungsradius vermieden, welche den Komfort des Formkörpers herabsetzen können.

In einer bevorzugten Ausführungsform weist der Formkörper die Gestalt eines Torus auf, insbesondere in Form eines geöffneten Torus. Ein Torus wird auch Reifen oder Donut genannt. Es ist nach der Erfindung insbesondere bevorzugt, dass der Formkörper die Geometrie eines geöffneten Torus aufweist mit an dessen offenen Enden sich verjüngenden Querschnitten (Zyklid). Die verjüngenden Enden bilden bei der Lagerung des Kopfes vorzugsweise den Eingriff des Hales. In dieser bevorzugten Ausführungsform kann der Hals dann im Wesentlichen plan zur Auflageebene liegen.

Mit ,Unterlage' wird diejenige Fläche bezeichnet, auf der der erfindungsgemäße Formkörper gelagert ist oder aufliegt. Sie ist in der Regel im Wesentlichen plan und bildet daher unter dem Formkörper eine Ebene. Die Unterlage ist z. B. eine Matratze, die Kopf-Auflagefläche einer Babyschale, eines Autokindersitzes, eines Kinderwagens, eines Fahrradkindersitzes oder eines Fahrradanhängers. Unter ,Auflageebene' wird die fiktive ,Unterlage' verstanden, auf der Formkörper aufliegen kann.

Unter ,Neigung' wird insbesondere die mittlere Steigung (insbesondere die gemittelte Sekantensteigung) gegenüber der fiktiven Auflageebene verstanden, auf der der erfindungsgemäße Formkörper gelagert sein kann. Andere Bezugsebenen oder Bezugslinien sind aber auch denkbar. Die Mittelung zur Bestimmung der mittleren Steigung erfolgt vorzugweise über einen wesentlichen Bereich der Außenlinie des entsprechenden Abschnitts des Querschnitts.

Unter einer ,Ellipse' wird eine geschlossene ovale Kurve bezeichnet. Die Ellipse kann durch die Angabe ihrer großen Halbachse und ihrer kleinen Halbachse definiert werden. Die große Halbachse bezeichnet dabei den halben Durchmesser an der weitesten Stelle; die kleine Halbachse bezeichnet den halben Durchmesser an der schmalsten Stelle der Ellipse. Erfindungsgemäß beträgt das Verhältnis der Länge der großen Halbachse zu der Länge der kleinen Halbachse vorzugsweise nicht mehr als 1 zu 10, im Besonderen bevorzugt nicht mehr als 1 zu 8, ganz besonders bevorzugt nicht mehr als 1 zu 5 und im Speziellen nicht mehr als 1 zu 3.

Erfindungsgemäß ist für den Formkörper zumindest in einem Teilbereich der eingeschlossene Winkel zwischen der Auflageebene und der gemittelten Tangente an einem nach außen weisenden Teil des Querschnitts des Formkörpers größer als der eingeschlossene Winkel zwischen der Auflageebene und einer gemittelten Tangente an einem nach innen weisenden Teil des Querschnitts des Formkörpers.

Eine gemittelte Tangente bezeichnet dabei vorzugsweise eine gemittelte Steigung über einen Bereich des Querschnittes. Die Mittelung kann dabei arithmetisch, aber auch quadratisch erfolgen. Ferner kann die gemittelte Tangente über eine Ausgleichsgerade über den betrachteten Bereich des Querschnittes approximiert werden.

Mit einem nach außen weisenden Teil des Querschnitts' ist derjenige Teil der Kontur (auch: Außenlinie) des Querschnitts gemeint, welche eine Neigung nach außen aufweist, d. h. vom Zentrum des Rings weg. Entsprechend ist mit einem nach innen weisenden Teil des Querschnitts' derjenige Teil der Kontur des Querschnitts gemeint, welche eine Neigung nach innen, d. h. zum Zentrum des Rings hin aufweist.

Erfindungsgemäß ist die große Halbachse der halben Ellipse bezogen auf die fiktive Auflageebene um 25° bis 50° geneigt.

Erfindungsgemäß ist der eingeschlossene Winkel zwischen der Auflageebene und einer gemittelten Tangente an dem nach außen weisenden Teil des Querschnitts 65° bis 90°, bevorzugter 70° bis 80°. Der eingeschlossene Winkel ist an dem nach innen weisenden Teil des Querschnitts vorzugsweise weniger oder gleich 60°, vorzugsweise weniger oder gleich 50°, vorzugsweise 30° bis 42°, noch bevorzugter 35° bis 40°.

Der Formkörper weist vorzugsweise zumindest teilweise eine Eindringhärte von 8 N bis 11 N, vorzugsweise von 9,5 N auf. Die Eindringtiefe beträgt vorzugsweise zumindest teilweise 25 % bis 55 %, vorzugsweise 40 %. Die Eindringhärte sowie die Eindringtiefe lassen sich insbesondere durch die Art des Materials beeinflussen.

Der Formkörper kann als Hohlkörper oder als Vollkörper ausgestaltet sein. Auch Kombinationen aus Hohl- und Vollkörper sind möglich. Bevorzugt ist ein Formkörper, der vollständig als Vollkörper gebildet ist.

Das Material des Formkörpers, insbesondere des Vollkörpers, ist vorzugsweise ausgewählt aus der Gruppe bestehend aus synthetischen Polymeren (Duroplasten, Thermoplasten oder Elastomere), wie z. B. Silikonen, Polyamiden, Polyestern, Acrylaten, Polyurethanen, natürlichen Polymeren wie z. B. Kautschuk, Kork und Cellulosen oder halbsynthetischen Polymeren wie z. B. Cellulose-Derivaten oder Mischungen davon. Besonders bevorzugt sind Silikone und Polyurethane (PU). Polyurethane können vorzugsweise in Form von PU-Schäumen eingesetzt werden. Besonders bevorzugt sind Silikone.

In einer besonders bevorzugten Ausführungsform weist der Polyurethan-Schaum ein oder mehrere (vorzugsweise alle) der folgenden Eigenschaften auf:
- eine geschlossene Oberfläche und/oder
- eine Rohdichte am Schaum von 40 bis 1200 kg/m³, vorzugsweise von 150 bis 1200 kg/m³, besonders bevorzugt von 150 bis 300 kg/m³, noch bevorzugter von 230 kg/m³, nach DIN EN ISO 845 und/oder
- eine Dichte der Haut von 500 bis 900 kg/m³, vorzugsweise von 600 bis 800 kg/m³, besonders bevorzugt von 700 kg/m³, nach DIN 53 479 und/oder
- eine Zugfestigkeit der Haut von 600 bis 800 KPa, vorzugsweise von 724 KPa, nach DIN 53 504 und/oder eine Zugfestigkeit des Schaums von 150 bis 250 KPa, vorzugsweise von 206 KPa nach DIN EN ISO 1798 und/oder
- eine Dehnung der Haut von 150 bis 250 %, vorzugsweise von 195 %, nach DIN 52 504 und/oder eine Dehnung des Schaums von 110 bis 180 %, vorzugsweise von 139 %, nach DIN EN ISO 1798 und/oder
- eine Weiterreißfestigkeit der Haut von 2 bis 4 N/mm, vorzugsweise von 3,1 N/mm, und/oder eine Weiterreißfestigkeit des Schaums von 0,5 bis 1,5 N/mm, vorzugsweise von 0,9 N/mm nach DIN ISO 34-1.

In einer bevorzugten Ausführungsform wird der Formkörper aus Polyurethan-Schaumstoff-Partikeln und/oder Polyurethan-Schaumstoff-Flocken hergestellt.

In einer alternativen bevorzugten Ausführungsform weist das Silikon ein oder mehrere (vorzugsweise alle) der folgenden Eigenschaften auf:
- eine Shore Härte am Silikon von etwa 45 Shore 00 bis etwa 90 Shore A, vorzugsweise von etwa 55 Shore 00 bis etwa 50 Shore A, ganz besonders bevorzugt von etwa 70 Shore 00, nach DIN 53505 und/oder
- eine Reißfestigkeit des Silikons von etwa 1 bis etwa 8 N/mm², vorzugsweise von etwa 2 bis etwa 6 N/mm², ganz besonders bevorzugt von etwa 2 N/mm² nach DIN 53504 *(specimen S3A)* und/oder
- eine Dehnung des Silikons von etwa 400 bis etwa 900 %, vorzugsweise von etwa 500 bis etwa 700 %, ganz besonders bevorzugt von etwa 600 % nach DIN 53504 *(specimen S3A)* und/oder
- eine Weiterreißfestigkeit des Silikons von etwa 1,2 bis etwa 16,5 N/mm, vorzugsweise von etwa 3 bis etwa 12 N/mm, ganz besonders bevorzugt von etwa 5 N/mm nach DIN 53515.

Das Silikon ist besonders bevorzugt biokompatibel und sterilisierbar.

Das Silikon kann vorzugsweise eine Mischung verschiedener Silikone darstellen. Beispielhaft seien folgende Hersteller von Silikonen genannt: BLUESTAR SILICONES, WACKER SILICONES, Elkem Silicones, ACC Silicones. Es sind aber auch Silikone anderer Hersteller möglich. Dem Fachmann ist geläufig, wie Silikone hergestellt und gemischt werden können, um einen Formkörper zur Aufnahme eines Schädels auf einer Auflageebene zu erhalten.

Das Silikon wird vorzugsweise eintalkumiert oder fluoriert, vorzugsweise fluoriert, d. h. mit Fluor beschichtet. Dadurch werden Fluoratome in die Oberfläche des Silikons eingearbeitet. Dies hat den Vorteil, dass eine glattere bzw. weniger klebrige Oberfläche erzeugt wird.

In einer alternativen bevorzugten Ausführungsform ist das Material des Formkörpers ein Thermoplast. Bevorzugt weist dieser Thermoplast eine Härte von 50 VLRH (DIN ISO 27588 (D=6mm)) bis 50 Shore A (DIN ISO 7619) auf. Dieser Thermoplast lässt sich gut verarbeiten.

Sofern der Formkörper ganz oder teilweise als Hohlkörper ausgestaltet ist, besteht er aus einer 'Hülle', welche aus den oben für den Vollkörper genannten Materialien oder Mischungen davon gebildet sein kann. Die Hülle kann elastisch sein. Die Dicke der Hülle hängt von dem Material ab und ist variabel. Die Hülle ist vorzugsweise so dick, dass der Formkörper eine ausreichende Stabilität erreicht, um den Kopf zu stützen. Der Hohlkörper kann eine Füllung enthalten. Diese kann ebenfalls aus den oben für den Vollkörper genannten Materialien oder Mischungen davon gebildet sein. Die Füllung kann flüssig, fest oder gelartig sein. Bevorzugt ist eine Füllung aus Flocken oder Partikeln. Damit kann eine Reduktion des Gesamtgewichts sowie eine Verbesserung der Anpassungsfähigkeit des Formkörpers an den angelagerten Kopf erreicht werden.

Bevorzugte Materialien für die Füllung sind ausgewählt aus der Gruppe bestehend aus natürlichen Materialien wie Pflanzenfasern (z. B. Baumwolle), Tierfasern (z. B. Schafswolle), Federn (z. B. Daunen), Pflanzensamen oder -kernen (z. B. Dinkelspelzen oder Kirschkernen) oder Mischungen davon.

Um die Hygiene oder die Langlebigkeit des erfindungsgemäßen Formkörpers zu verbessern, können dem Material für den Formkörper und/oder der Füllung Additive zugesetzt werden, so z. B. ein UV-Schutz-Additiv und/oder ein antibakterieller Wirkstoff. In einer bevorzugten Ausführungsform können im Polyurethan-Schaum und/oder im Silikon ein UV-Schutz-Additiv und/oder ein antibakterieller Wirkstoff enthalten sein.

In einer bevorzugten Ausführungsform ist das Material für den Formkörper und/oder die Füllung im Wesentlichen biobasiert und/oder bioabbaubar. Bevorzugt ist der Polyurethan-Schaum oder das Silikon biologisch abbaubar oder zumindest derart ausgebildet, dass das Material schneller als normalerweise üblich zersetzt werden kann.

Bevorzugt ist das Material des Vollkörpers bzw. der Hülle des Hohlkörpers wischdesinfizierbar. Dies dient einer verbesserten Hygiene. Insbesondere weist das Material des Vollkörpers bzw. der Hülle des Hohlkörpers eine geschlossene Oberfläche auf. Diese ist vorzugsweise dadurch gekennzeichnet, dass das Material wenig, bevorzugt keine Flüssigkeit aufnehmen kann.

In einer besonders bevorzugten Ausführungsform weist der Formkörper eine Umhüllung (Bezug) auf, die ihn vollständig oder teilweise umgibt. Der Bezug des Formkörpers kann aus allen handelsüblichen Materialien gebildet sein. Bevorzugt sind textile Materialien aus Pflanzen- oder Tierfasern, vorzugsweise Gewebe, besonders bevorzugt Baumwolle. Es sind aber auch andere natürliche oder nicht-natürliche Materialien möglich, so z. B. Leder. Als synthetische Materialien sind z. B. Polyamide oder Polyester oder Mischungen davon möglich. Natürliche Materialien aus biologischem Anbau sind besonders bevorzugt.

Je nach Material kann der Bezug einfach oder mehrfach verwendet werden. Dies ist abhängig von der Langlebigkeit und Wasch- und Wischfähigkeit des Materials. Ist der Bezug beispielsweise aus Baumwolle, ist er vorzugsweise waschbar und kann mehrfach verwendet werden.

In einer bevorzugten Ausführungsform enthält das Material des Bezuges ein Additiv, so z. B. ein UV-Schutz-Additiv und/oder einen antibakteriellen Wirkstoff, um die Hygiene oder die Langlebigkeit des Bezuges zu verbessern.

In einer bevorzugten Ausführungsform liegt der Bezug auf dem Formkörper auf und umgibt ihn nicht vollständig, d. h. der Bezug umgibt den Formkörper lediglich teilweise. Um ein Verrutschen zu vermeiden, ist der Bezug vorzugsweise geprägt, beispielsweise durch Thermoformen. In dieser Ausführungsform liegt der Bezug beispielsweise im Wesentlichen rund vor, weist aber im Bereich des Aufliegens auf dem Formkörper eine Prägung in dem Sinne auf, dass die Form des Bezuges an die Form des Formkörpers angepasst ist. In Benutzung befindet sich in dieser Ausführungsform der Bezug zwischen Schädel und Formkörper.

In einer alternativen bevorzugten Ausführungsform umgibt der Bezug den Formkörper vollständig und kann von dem Formkörper gelöst und wieder aufgebracht werden, beispielsweise durch einen Reißverschluss oder einen oder mehrere Druckknöpfe. Ein Reißverschluss ist bevorzugt. Dadurch kann der Bezug separat von dem Formkörper gewaschen werden, was ebenfalls die Hygiene verbessert. Der Reißverschluss kann teilweise versenkt sein, d. h. dass der Reißverschluss in einer kleinen Tasche des Bezugs zumindest teilweise unterbringbar oder einschiebbar ist. Hierdurch können harte Kanten des Reißverschlusses wirksam vermieden werden. Denkbar ist auch, dass der Reißverschluss ein verdeckter Reißverschluss ist, welcher von einem oder mehreren Textil- oder Kunststoffstreifen über zumindest einen Teil der Länge des Reißverschlusses abgedeckt wird.

Der Bezug kann passgenau dem Formkörper anliegen. Es ist jedoch besonders bevorzugt, dass der Bezug nicht-passgenau ist, d. h. Bereiche aufweist, die in der regulären Nutzung des Formkörpers nicht von dem Formkörper eingenommen werden. Diese Bereiche werden nachfolgend auch als Aussparungen' bezeichnet.

Die Aussparungen setzen sich vorzugsweise in den Bereichen des Bezugs fort, der die offenen Enden des Formkörpers umgibt. Es ist insbesondere bevorzugt, dass die Aussparungen so ausgebildet sind, dass die offenen Enden des Formkörpers dadurch in ihrer äußeren Erscheinung überbrückt werden und sich so ein im Wesentlichen geschlossener Ring ergibt. Durch die Aussparungen kann ein Bereich des Formkörpers bereitgestellt werden, der besonders flach ist und insbesondere Freiheiten für den Hals bereithalten kann, der den Komfort und die Belastungsverteilung weiter verbessert.

Der Bezug weist vorzugsweise ein erstes Ende und ein zweites Ende auf. Die Enden des Bezugs, vorzugsweise die Aussparungen des Bezugs, weisen vorzugsweise voneinander ablösbare Mittel auf. Im Falle der Aussparungen an den offenen Enden des Formkörpers können die Mittel insbesondere so ausgebildet sein, dass mit ihrer Hilfe die offenen Enden des Formkörpers haltend zueinander gebracht bzw. verbunden werden. In dieser Ausführungsform führen die Aussparungen mit ihren ablösbaren Mitteln demnach zu einem funktionalen Ringschluss.

Die ablösbaren Mittel können aber auch an dem Formkörper angebracht sein (und nicht am Bezug). Dies ist insbesondere dann vorgesehen, wenn der Formkörper geöffnet ist und ein erstes Ende und ein zweites Ende aufweist und ohne Bezug ausgestaltet ist. Die Enden des Formkörpers weisen dann jeweils voneinander ablösbare Mittel zum Verbinden der Enden auf.

Die ablösbaren Mittel (am Bezug oder am Formkörper) sind vorzugsweise ausgewählt aus der Gruppe umfassend: Klettverschluss, Knopf/Knopfloch, Druckknopf/ Druckknopfaufnehmer, Haken/Öse oder Schnüre. Besonders bevorzugt ist ein Klettverschluss. Dieser kann mit einem Klettstreifen oder Klettpunkt ausgebildet sein. Besonders bevorzugt ist die Ausführung mit mindestens einem Klettpunkt.

Vorzugsweise sind die ablösbaren Mittel so ausgestaltet, dass der Formkörper in geschlossener Form variabel verschiedene Größen (Durchmesser) annehmen kann. So ist eine Anpassung an verschiedene Kopfgrößen möglich.

Besonders bevorzugt ist das Material des Bezugs zumindest teilweise oder vollständig klettbar. In einer Ausführungsform weist der Bezug das klettbare Material lediglich an den Aussparungen auf. Weist der Bezug ein klettbares Material auf, so bildet in dieser Ausführungsform das klettbare Material das funktionale Gegenstück zu dem Klettstreifen oder Klettpunkt. Das klettbare Material hat gegenüber dem sonst üblichen Gegenstück (zu einem Klettpunkt oder Klettstreifen) den Vorteil, dass es weicher und angenehmer auf der Haut ist.

Als klettbares Material kommen vorzugsweise Materialien oder Textilien in Betracht, welche eine grobe Verwebung aufweisen und als strukturelle Eigenschaft ein Gewicht von insbesondere 190 (±20%) g/m² gemäß UNE 40600-6 aufweisen.

Das an dem Formkörper oder einer Aussparung am Bezug angeordnete ablösbare Mittel kann ebenso mit einer Unterlage zusammenwirken. In diesem Fall muss die

Unterlage oder ein Bezug der Unterlage zumindest teilweise so ausgebildet sein, dass sie das funktionale Gegenstück zu dem an der Aussparung bzw. am Bezug oder am Formkörper angeordneten ablösbaren Mittel aufweist. In diesem Fall können die voneinander ablösbaren Mittel auch als Befestigungsmittel bezeichnet werden. Insbesondere kann der Formkörper oder der Bezug ein erstes Befestigungsmittel zum Befestigen des Formkörpers oder des Bezugs an der Unterlage aufweisen und die Unterlage oder ein Bezug der Unterlage können ein zweites Befestigungsmittel aufweisen, wobei das erste und das zweite Befestigungsmittel verbindbar sind. Als Befestigungsmittel sind vorzugsweise die oben genannten ablösbaren Mittel geeignet, es sind aber auch andere Befestigungsmittel denkbar.

In einer Ausführungsform ist vorgesehen, dass der Formkörper oder die Aussparungen am Bezug (bzw. der Bezug) voneinander ablösbare Mittel zum Verbinden der offenen Enden aufweisen und zusätzlich ein erstes Befestigungsmittel aufweisen, welches dem Befestigen des Formkörpers oder des Bezugs an der Unterlage dient. So können die offenen Enden verbunden und der Formkörper an einer Unterlage befestigt werden.

Die Unterlage ist vorzugsweise eine Matratze, die Kopf-Auflagefläche einer Babyschale, eines Autokindersitzes, eines Kinderwagens, eines Fahrradkindersitzes oder eines Fahrradanhängers. Durch das Befestigen des Formkörpers oder des Bezugs des Formkörpers an der Unterlage kann der Formkörper fixiert und ein Verrutschen des Formkörpers auf der Unterlage verhindert werden. Dies ist insbesondere dann vorteilhaft, wenn die Unterlage schräg oder senkrecht ist, wie zum Beispiel bei der Kopf-Auflagefläche einer Babyschale, eines Autokindersitzes oder bei einem Fahrradkindersitz.

Die Erfindung umfasst auch die Kombination aus dem erfindungsgemäßen Formkörper mit einem ersten Befestigungsmittel (das erste Befestigungsmittel kann dabei am Formkörper oder am Bezug des Formkörpers angebracht sein) und einem zweiten Befestigungsmittel zur Befestigung des Formkörpers an einer Unterlage, wobei das erste und das zweite Befestigungsmittel verbindbar sind. Vorzugsweise ist das zweite Befestigungsmittel an der Unterlage oder einem Bezug der Unterlage befestigt.

In einer weiteren Ausführungsform weist der Formkörper ein oder mehrere Versteifungselemente auf. Diese können insbesondere der Größenverstellung des vorzugsweise geöffneten Rings dienen. So kann damit die durch Öffnen oder Schließen des Rings gewünschte Größe des Rings festgehalten werden. Sie können aber auch der Verfestigung des Formkörpers dienen.

Vorzugsweise ist das Versteifungselement zumindest teilweise, vorzugsweise vollständig, von dem Formkörper umgeben. Im Falle eines Vollkörpers kann das Versteifungselement vorzugsweise bereits bei der Herstellung des Vollkörpers dort eingebracht werden. Zum Beispiel kann es in der Ausführungsform mit einem Vollkörper aus Silikon in das Silikon eingeschmolzen sein. Dies ist eine besonders bevorzugte Ausführungsform. Im Falle des Hohlkörpers mit Füllung ist das Versteifungselement vorzugsweise vollständig von der Füllung umgeben. Denkbar wäre jedoch auch eine Anordnung des Versteifungselements an der äußeren Oberfläche des Formkörpers, so z. B. zwischen Bezug des Formkörpers und Formkörper.

Das Versteifungselement besteht vorzugsweise aus zwei Gliedern. Es ist jedoch auch denkbar, dass das Versteifungselement aus einem Glied besteht oder aus mehr als zwei Gliedern, beispielsweise aus drei oder mehr Gliedern. Die Glieder können (z. B. durch Scharniere) beweglich miteinander verbunden sein. Vorteilhaft ist, wenn die Stellung der Glieder zueinander stufenlos und/oder stufenweise arretierbar ausgestaltet ist.

Das bevorzugte Material für das Versteifungselement ist härter (d. h. es hat eine höhere Festigkeit) als das des Formkörpers bzw. der Füllung des Hohlkörpers. Denkbar wäre auch ein im Wesentlichen ähnliches Material wie das des Formkörpers, welches jedoch durch Additive und/oder eine unterschiedliche Behandlung eine andere Steifigkeit erreicht. Bevorzugte Materialien für das Versteifungselement umfassen insbesondere Kunststoff, Kohlefaser, Glasfaser und Metall, insbesondere Edelstahl oder Aluminium.

In einer bevorzugten Ausführungsform weist der Formkörper ein Versteifungselement und keinen Bezug auf. Dadurch kann ein größenverstellbarer Formkörper bereitgestellt werden, welcher gegenüber einem Formkörper mit Bezug preiswerter und hygienischer ist. Eine verbesserte Hygiene ist insbesondere für den Krankenhausbereich, beispielsweise im OP, vorteilhaft.

In einer anderen bevorzugten Ausführungsform weist der Formkörper ein Versteifungselement und einen Bezug auf, welcher auf dem Formkörper aufliegt und ihn nicht vollständig umgibt. Um ein Verrutschen zu vermeiden, ist der Bezug vorzugsweise geprägt, beispielsweise durch Thermoformen. Für den Krankenhausbereich ist bevorzugt, dass der Bezug lediglich einmalig verwendet wird. Es kann jedoch auch ein Bezug verwendet werden, welcher wiederverwendbar ist.

Der erfindungsgemäße Formkörper und/oder die erfindungsgemäße Kombination kann der Prävention und/oder der Behandlung von lagebedingten Verformungen des Schädels, d. h. Schädeldeformationen, von Menschen, insbesondere von Säuglingen, dienen.

Der erfindungsgemäße Formkörper und/oder die erfindungsgemäße Kombination kann dem Stützen und/oder Lagern des Schädels dienen. Dies kann beispielsweise bei pflegebedürftigen Menschen oder zur Stabilisierung der Kopflage bei künstlicher Beatmung eines Patienten sinnvoll sein. Das Stützen und/oder Lagern kann auch der Entlastung des Kopfes dienen und/oder ein bequemeres Liegen ermöglichen und ist daher auch im nicht-medizinischen Bereich sinnvoll.

Die Erfindung umfasst ferner die Verwendung des erfindungsgemäßen Formkörpers und/oder die Verwendung der erfindungsgemäßen Kombination zum Stützen und/oder Lagern eines Schädels, insbesondere zur Prävention und/oder zur Behandlung von lagebedingten Verformungen des Schädels, insbesondere des Schädels von Säuglingen.

Nachfolgend wird die Erfindung anhand von beispielhaften Ausführungsformen erläutert:
Fig. 1
   eine schematische Draufsicht einer bevorzugten Ausführungsform des erfindungsgemäßen Formkörpers;
Fig. 2
   eine perspektivische Seitenansicht einer bevorzugten Ausführungsform des erfindungsgemäßen Formkörpers;;
Fig. 3
   eine perspektivische Seitenansicht mit einem Querschnitt einer bevorzugten Ausführungsform des erfindungsgemäßen Formkörpers;;
Fig. 4
   eine perspektivische Seitenansicht mit zwei Querschnitten und eingezeichneten Steigungen und/oder Tangenten an einer nach außen und einer nach innen weisenden Fläche bei einer bevorzugten Ausführungsform des erfindungsgemäßen Formkörpers;
Fig. 5
   eine perspektivische Seitenansicht einer bevorzugten Ausführungsform des erfindungsgemäßen Formkörpers mit einer bevorzugten Ausführungsform eines Versteifungselements;
Fig. 6
   eine perspektivische Seitenansicht einer bevorzugten Ausführungsform des erfindungsgemäßen Formkörpers mit einem erfindungsgemäßen Bezug sowie einem Klettverschluss;
Fig. 7
   eine Draufsicht einer bevorzugten Ausführungsform des erfindungsgemäßen Formkörpers mit einem erfindungsgemäßen Bezug;
Fig. 8
   eine perspektivische Seitenansicht einer bevorzugten Ausführungsform des erfindungsgemäßen Formkörpers mit einem erfindungsgemäßen Bezug und mit einem teilweise versenkbaren Reißverschluss.

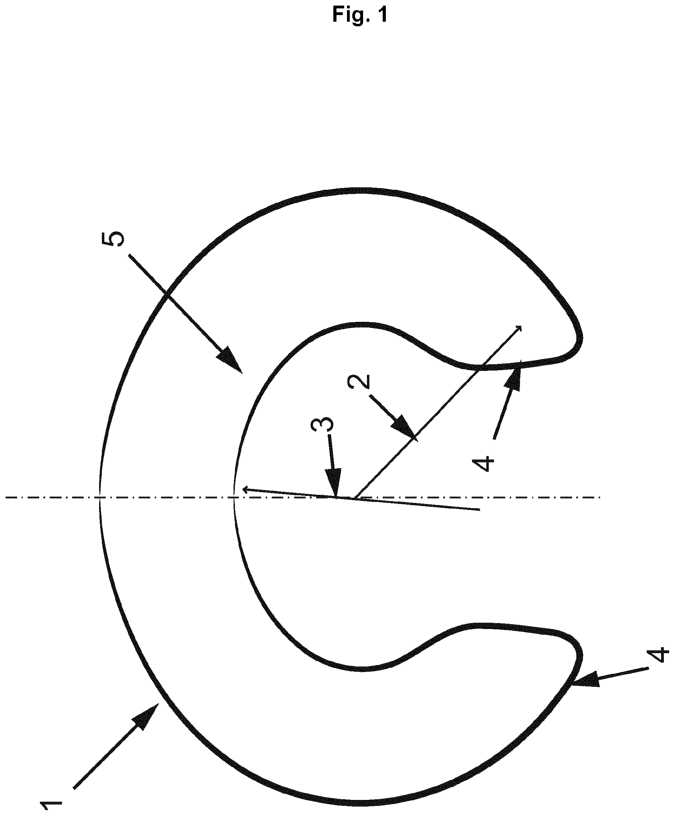

Figur 1 zeigt eine bevorzugte Ausführungsform des erfindungsgemäßen Formkörpers (1) in Form eines geöffneten Rings in der Draufsicht. Der Ring weist einen Ringradius (2) und eine Ringachse (3) oder Z-Achse auf. Der Ringradius (2) kann variieren. Die Form des Formkörpers (1) weist die Form eines geöffneten Ovals auf. Der Ring weist ferner eine Spiegelachse auf, welche senkrecht zu einer Auflageebene und mittig durch eine Öffnung des Ringes verläuft, welche von zwei Enden (4) gebildet wird. Die Enden (4) des Formkörpers (1) sind abgerundet ausgebildet und sind zu einer Auflageebene abgeflacht. Der Formkörper (1) weist eine Auflagefläche (5) zur Aufnahme eines Kopfes auf, welcher abhängig von dem Ringradius (2) insbesondere der Kopf eines Säuglings sein kann.

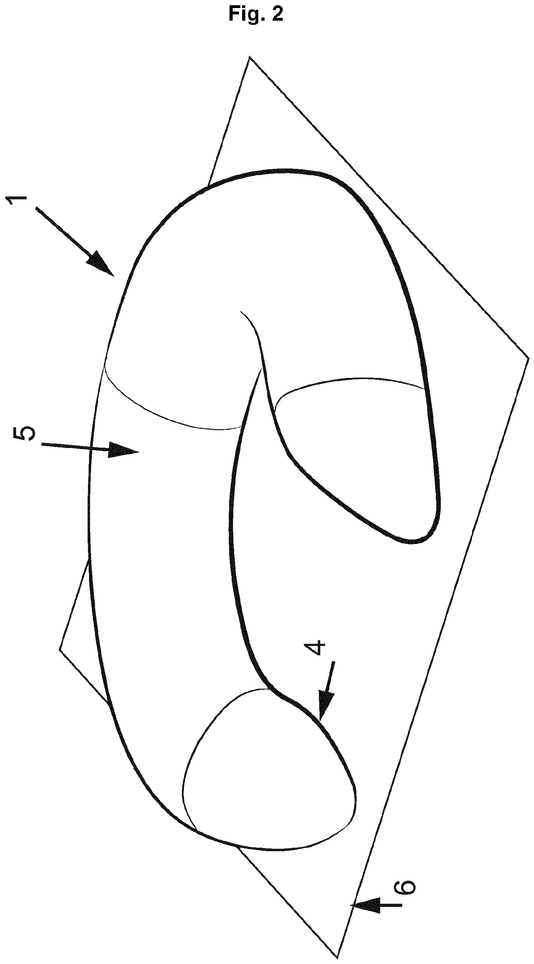

Figur 2 zeigt ebenfalls eine bevorzugte Ausführungsform des erfindungsgemäßen Formkörpers (1) in einer dreidimensionalen perspektivischen Ansicht. Der Formkörper (1) befindet sich auf einer Auflageebene (6).

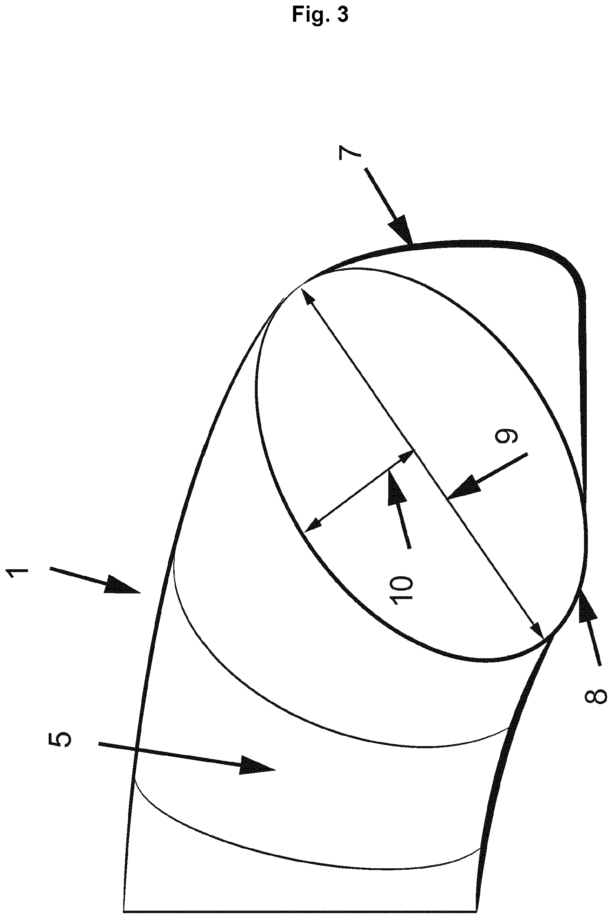

Figur 3 zeigt eine perspektivische Seitenansicht eines Teils des Formkörpers (1) mit einem Querschnitt (7) in einer ebenfalls bevorzugten Ausführungsform. In den Querschnitt (7) des Ringes ist eine Ellipse (8) eingezeichnet. Die Ellipse (8) ist im Wesentlichen passgenau überlagert, insbesondere bezüglich einer oberen Hälfte der Ellipse (8), welche die Kontur oder den Rand des Querschnittes (7) im Wesentlichen überdeckt. Die Ellipse (8) weist eine große Halbachse (9) und eine kleine Halbachse (10) auf.

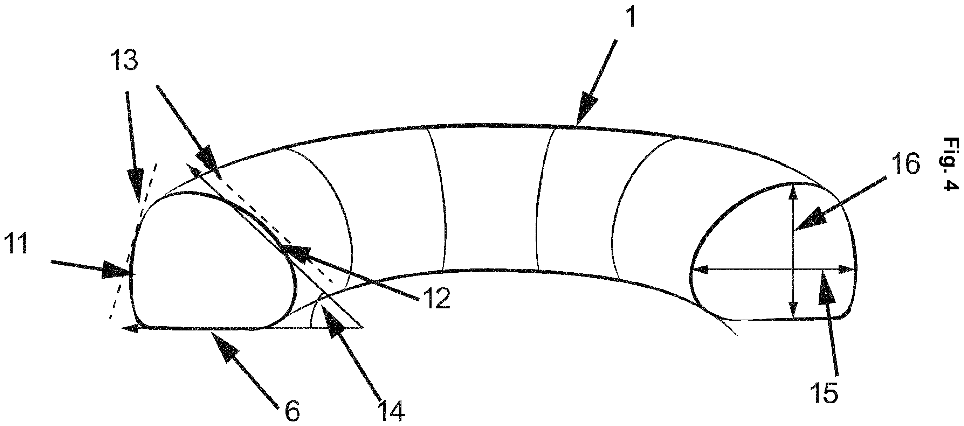

Figur 4 zeigt eine perspektivische Seitenansicht mit zwei Querschnitten (7) und eingezeichneten Tangenten (13) an einem nach außen (11) und einem nach innen (12) weisenden Teil des Querschnitts (7) bei einer ebenfalls bevorzugten Ausführungsform des erfindungsgemäßen Formkörpers (1). Ferner ist der eingeschlossene Winkel (14) zwischen einer Auflageebene (6) und einer gemittelten Tangenten (13) an einem nach innen weisenden Teil des Querschnitts (12) eingezeichnet. Ebenfalls eingezeichnet sind in Figur 4 der horizontale, in diesem Falle maximale Durchmesser (15) und der vertikale (maximale) Durchmesser eines Querschnittes (7) durch den Formkörper (1).

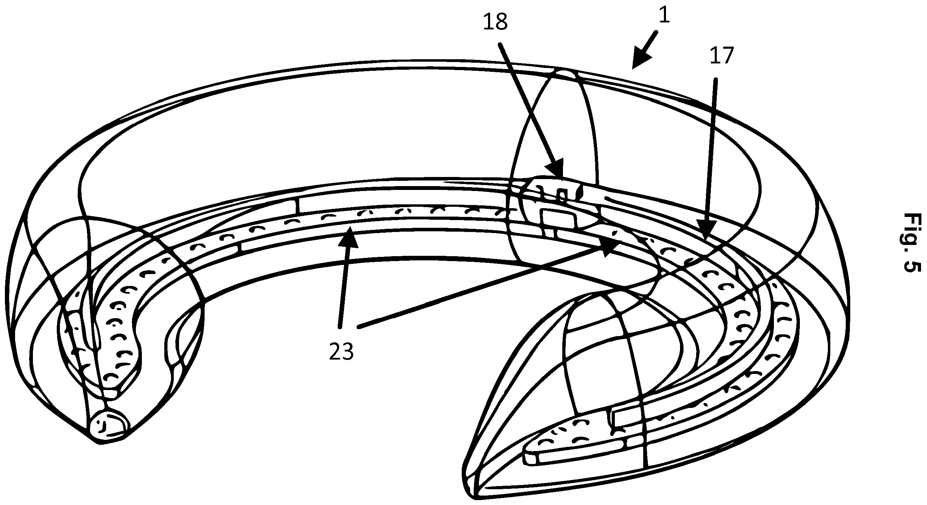

Figur 5 zeigt eine perspektivische Seitenansicht einer bevorzugten Ausführungsform des erfindungsgemäßen Formkörpers (1) mit einem eingegossenen oder eingefügten Versteifungselement (17). Das Versteifungselement (17) weist zwei Glieder (23) auf, welche durch Scharniere (18) oder andere Gelenke oder gelenkartige Verbindungen verbunden sein können. Das Versteifungselement (17) ist beispielsweise aus einem Kunststoff oder einem Metall gefertigt.

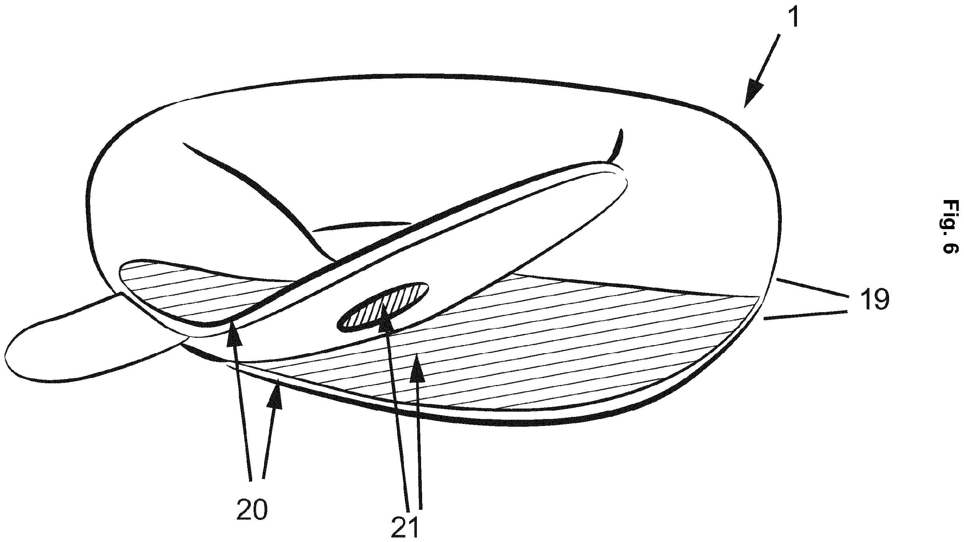

Figur 6 zeigt eine perspektivische Seitenansicht einer bevorzugten Ausführungsform des erfindungsgemäßen Formkörpers (1) mit einem erfindungsgemäßen Bezug (19) des Formkörpers (1), welcher den Formkörper (1) zumindest teilweise umgibt, sowie einem Klettverschluss (21). Der Bezug (19) weist zwei Enden (20) auf, an welchen ein Klettverschluss (21) angebracht ist. Beide Enden (20) weisen einen flachen Bereich auf. Der Klettverschluss besteht aus einem Klettpunkt sowie einem klettfähigen Material auf der Gegenseite.

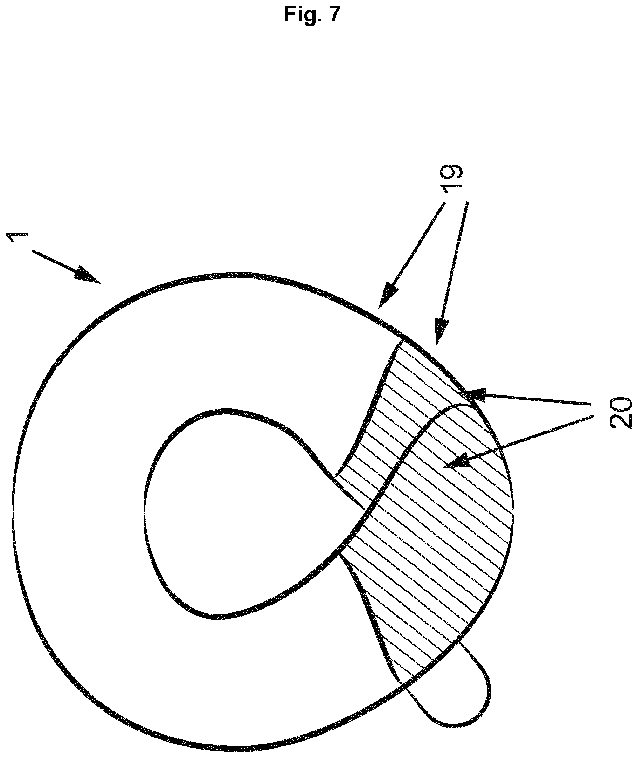

Figur 7 zeigt eine Draufsicht einer bevorzugten Ausführungsform des erfindungsgemäßen Formkörpers (1) mit einem erfindungsgemäßen Bezug (19). Die Enden (20) liegen aufeinander, der Ring ist somit geschlossen.

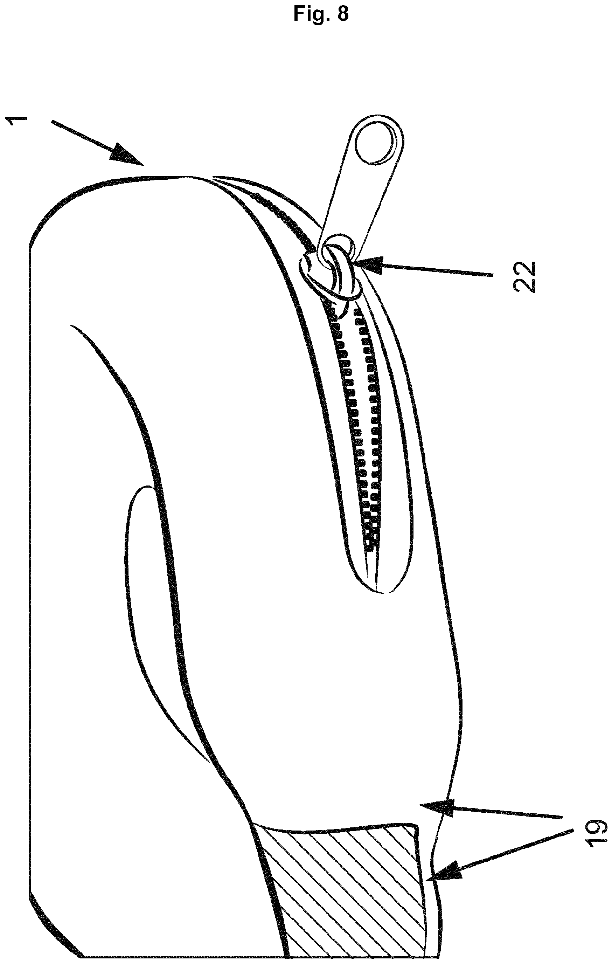

Figur 8 zeigt eine perspektivische Seitenansicht einer bevorzugten Ausführungsform des erfindungsgemäßen Formkörpers (1) mit einem erfindungsgemäßen Bezug (19) und mit einem teilweise versenkbaren Reißverschluss (22). Der Reißverschluss (22) ist in einer kleinen Tasche des Bezugs (19) zumindest teilweise unterbringbar oder einschiebbar.

### Bezugszeichenliste

- 1: Formkörper
- 2: Ringradius
- 3: Ringachse (Z-Achse)
- 4: Ende des Formkörpers
- 5: Auflagefläche
- 6: Auflageebene
- 7: Querschnitt
- 8: Ellipse
- 9: große Halbachse
- 10: kleine Halbachse
- 11: nach außen weisender Teil des Querschnitts
- 12: nach innen weisender Teil des Querschnitts
- 13: Tangente
- 14: eingeschlossener Winkel zwischen der Auflageebene und einer gemittelten Tangente
- 15: horizontaler Durchmesser
- 16: vertikaler Durchmesser
- 17: Versteifungselement
- 18: Gelenk/Scharnier
- 19: Bezug des Formkörpers
- 20: Ende des Bezugs
- 21: Klettverschluss
- 22: Reißverschluss
- 23: Glied

## Patentansprüche

1. Formkörper (1) zur Aufnahme eines Schädels auf einer Auflageebene (6), welcher im Wesentlichen ringförmig und vorzugsweise geöffnet ist, wobei
a. zumindest in einem Teilbereich die Kontur des Querschnitts (7) des Formkörpers (1) eine bezogen auf die Auflageebene (6) geneigte halbe Ellipse (8) aufweist und
b. zumindest in einem Teilbereich die Kontur des Querschnitts (7) des Formkörpers (1) asymmetrisch ist, wobei
zumindest in einem Teilbereich die Kontur des Querschnitts (7) des Formkörpers (1) eine konvexe Auflagefläche aufweist, welche Fläche diejenige Fläche des Formkörpers (1) ist, die im Wesentlichen nach innen, d. h. in Richtung des Zentrums des Formkörpers (1) zeigt oder zu diesem geneigt ist und auf welcher der Kopf aufliegt,
wobei
zumindest in einem Teilbereich der eingeschlossene Winkel (14) zwischen der Auflageebene (6) und einer gemittelten Tangente (13) an einem nach außen weisenden Teil des Querschnitts (11) des Formkörpers (1) größer ist als der eingeschlossene Winkel (14) zwischen der Auflageebene (6) und einer gemittelten Tangente (13) an einem nach innen weisenden Teil des Querschnitts (12) des Formkörpers (1), **dadurch gekennzeichnet, dass**
die große Halbachse (9) der halben Ellipse (8) bezogen auf die Auflageebene (6) um 25° bis 50° geneigt ist und der eingeschlossene Winkel (14) an dem nach außen weisenden Teil des Querschnitts (11) 65° bis 90°, bevorzugt 70° bis 80° ist und der eingeschlossene Winkel (14) an dem nach innen weisenden Teil des Querschnitts (12) weniger oder gleich 60°, vorzugsweise weniger oder gleich 50°, vorzugsweise 30° bis 42°, noch bevorzugter 35° bis 40°, ist.

2. Der Formkörper nach Anspruch 1, **dadurch gekennzeichnet, dass** der Formkörper (1) mindestens teilweise eine Eindringhärte von 8 N bis 11 N, vorzugsweise von 9,5 N, und/oder mindestens teilweise eine Eindringtiefe von 25 % bis 55 %, vorzugsweise von 40 %, aufweist und/oder
der Formkörper (1) ein Material umfasst ausgewählt aus einem synthetischen Polymer, wie zum Beispiel Silikon, Polyamide, Polyester, Acrylate oder Polyurethane (PUR/PU), wie zum Beispiel ein Polyurethan-Schaum, einem natürlichen Polymer, wie zum Beispiel Kautschuk, Kork oder Cellulosen, und einem halbsynthetischen Polymer wie zum Beispiel Cellulose-Derivate, oder Mischungen davon, vorzugsweise aus einem Silikon und/oder Polyurethan-Schaum.

3. Der Formkörper nach Anspruch 2, **dadurch gekennzeichnet, dass** der Polyurethan-Schaum
- eine geschlossene Oberfläche aufweist und/oder
- eine Rohdichte am Schaum von 40 bis 1200 kg/m³, vorzugsweise von 150 bis 1200 kg/m³, besonders bevorzugt von 150 bis 300 kg/m³, noch bevorzugter von 230 kg/m³, nach DIN EN ISO 845 und/oder
- eine Dichte der Haut von 500 bis 900 kg/m³, vorzugsweise von 600 bis 800 kg/m³, besonders bevorzugt von 700 kg/m³, nach DIN 53 479 und/oder
- eine Zugfestigkeit der Haut von 600 bis 800 KPa, vorzugsweise von 724 KPa, nach DIN 53 504 und/oder eine Zugfestigkeit des Schaums von 150 bis 250 KPa, vorzugsweise von 206 KPa nach DIN EN ISO 1798 und/oder
- eine Dehnung der Haut von 150 bis 250 %, vorzugsweise von 195 %, nach DIN 52 504 und/oder eine Dehnung des Schaums von 110 bis 180 %, vorzugsweise von 139 %, nach DIN EN ISO 1798 und/oder
- eine Weiterreißfestigkeit der Haut von 2 bis 4 N/mm, vorzugsweise von 3,1 N/mm, und/oder eine Weiterreißfestigkeit des Schaums von 0,5 bis 1,5 N/mm, vorzugsweise von 0,9 N/mm nach DIN ISO 34-1
aufweist und/oder
das Silikon
- eine Shore Härte am Silikon von etwa 45 Shore 00 bis etwa 90 Shore A, vorzugsweise von etwa 55 Shore 00 bis etwa 50 Shore A, ganz besonders bevorzugt von etwa 70 Shore 00, nach DIN 53505 und/oder
- eine Reißfestigkeit des Silikons von etwa 1 bis etwa 8 N/mm², vorzugsweise von etwa 2 bis etwa 6 N/mm², ganz besonders bevorzugt von etwa 2 N/mm² nach DIN 53504 *(specimen S3A)* und/oder
- eine Dehnung des Silikons von etwa 400 bis etwa 900 %, vorzugsweise von etwa 500 bis etwa 700 %, ganz besonders bevorzugt von etwa 600 % nach DIN 53504 *(specimen S3A)* und/oder
- eine Weiterreißfestigkeit des Silikons von etwa 1,2 bis etwa 16,5 N/mm, vorzugsweise von etwa 3 bis etwa 12 N/mm, ganz besonders bevorzugt von etwa 5 N/mm nach DIN 53515
aufweist und/oder
- eintalkumiert oder fluoriert, vorzugsweise fluoriert ist.

4. Der Formkörper nach einem der Ansprüche 2 oder 3, **dadurch gekennzeichnet, dass** im Polyurethan-Schaum und/oder im Silikon ein UV-Schutz-Additiv und/oder ein antibakterieller Wirkstoff enthalten ist.

5. Der Formkörper nach einem der Ansprüche 2 bis 4, **dadurch gekennzeichnet, dass** der Polyurethan-Schaum biologisch abbaubar ist.

6. Der Formkörper nach einem der Ansprüche 2 bis 5, **dadurch gekennzeichnet, dass** der Formkörper (1) aus Polyurethan-Schaumstoff-Partikeln und/oder Polyurethan-Schaumstoff-Flocken hergestellt wird.

7. Der Formkörper nach einem der vorhergehenden Ansprüche, **gekennzeichnet durch** ein oder mehrere der folgenden Merkmale:
(i) dass der Schädel ein Schädel eines Säuglings ist,
(ii) dass der Formkörper (1) eine abgeflachte Auflagefläche (5) umfasst,
(iii) dass der Formkörper (1) einen Vollkörper und/oder einen Hohlkörper aufweist, bevorzugt einen Vollkörper,
(iv) dass der Formkörper (1) geöffnet ist und ein erstes Ende (4) und ein zweites Ende (4) aufweist,
(v) dass sich ein mittlerer Durchmesser eines Querschnitts (7) des Formkörpers (1) zu den Enden hin verringert.

8. Der Formkörper nach Anspruch 7, **dadurch gekennzeichnet, dass** die Enden (4) des Formkörpers (1) jeweils voneinander ablösbare Mittel zum Verbinden der Enden (4) aufweisen.

9. Der Formkörper nach einem der vorhergehenden Ansprüche, **dadurch gekennzeichnet, dass** der Formkörper (1) einen Bezug (19) umfasst, wobei vorzugsweise der Bezug (19) den Formkörper (1) vollständig oder teilweise umgibt, vorzugsweise vollständig umgibt
und/oder
der Bezug (19) auf dem Formkörper (1) aufliegt, ihn teilweise umgibt und geprägt ist.

10. Der Formkörper nach Anspruch 9, **dadurch gekennzeichnet, dass** der Bezug (19) ein erstes Ende (20) und ein zweites Ende (20) aufweist und die Enden (20) des Bezugs (19) jeweils voneinander ablösbare Mittel zum Verbinden der Enden (20) aufweisen.

11. Der Formkörper nach einem der Ansprüche 8 oder 10, **dadurch gekennzeichnet, dass** die ablösbaren Mittel ausgewählt sind aus der Gruppe umfassend Klettverschluss, Knopf und Knopfloch, Druckknopf und Druckknopfaufnehmer, Haken und Öse, Schnüre, vorzugsweise Klettverschluss umfassend Klettstreifen oder Klettpunkt, noch bevorzugter Klettpunkt.

12. Der Formkörper nach einem der vorhergehenden Ansprüche, **dadurch gekennzeichnet, dass** der Formkörper (1) ein Versteifungselement (17) umfasst, wobei das Versteifungselement (17) vorzugsweise aus zwei Gliedern (23) besteht.

13. Der Formkörper nach einem der vorhergehenden Ansprüche, **dadurch gekennzeichnet, dass** der Formkörper (1) oder der Bezug (19) ein erstes Befestigungsmittel zum Befestigen des Formkörpers (1) oder des Bezugs (19) an einer Unterlage aufweist.

14. Eine Kombination umfassend
a. den Formkörper (1) nach Anspruch 13,
b. ein zweites Befestigungsmittel zur Befestigung des Formkörpers (1) nach a. wobei das erste und das zweite Befestigungsmittel verbindbar sind.

15. Verwendung des Formkörpers nach einem der Ansprüche 1 bis 13 oder der Kombination nach Anspruch 14 zum Stützen und/oder Lagern des Schädels.

## Claims

1. Moulded body (1) for receiving a skull on a support surface (6), which is substantially ringshaped and preferably open, wherein
a. at least in one section, the contour of the cross-section (7) of the moulded body (1) has a half ellipse (8) inclined relative to the support surface (6) and
b. at least in one section, the contour of the cross-section (7) of the moulded body (1) is asymmetrical, wherein
at least in one section, the contour of the cross-section (7) of the moulded body (1) has a convex support surface, which surface is the surface of the moulded body (1) that points substantially inwards, i.e. towards the centre of the moulded body (1), or is inclined towards it, and on which the head rests, wherein
at least in one section, the enclosed angle (14) between the support surface (6) and a mean tangent (13) on an outwardly facing part of the cross-section (11) of the moulded body (1) is greater than the enclosed angle (14) between the support surface (6) and a mean tangent (13) on an inwardly facing part of the cross-section (12) of the moulded body (1), **characterized in that**
the major semi-axis (9) of the half ellipse (8) is inclined by 25° to 50° relative to the support surface (6) and the enclosed angle (14) on the outwardly facing part of the cross-section (11) is 65° to 90°, preferably 70° to 80°, and the enclosed angle (14) on the inwardly facing part of the cross-section (12) is less than or equal to 60°, preferably less than or equal to 50°, preferably 30° to 42°, more preferably 35° to 40°.

2. Moulded body according to Claim 1, **characterized in that** the moulded body (1) has at least partially a penetration hardness of 8 N to 11 N, preferably of 9.5 N, and/or at least partially a penetration depth of 25% to 55%, preferably of 40%, and/or
the moulded body comprises a material selected from a synthetic polymer, such as silicon, polyamides, polyesters, acrylates or polyurethanes (PUR/PU), for example, such as polyurethane foam, a natural polymer, for example, such as rubber, cork or celluloses, for example, and a semisynthetic polymer, such as cellulose derivatives, for example, or mixtures thereof, preferably from a silicon and/or polyurethane foam.

3. Moulded body according to Claim 2, **characterized in that** the polyurethane foam
- has a closed surface and/or
- a foam bulk density of 40 to 1200 kg/m³, preferably of 150 to 1200 kg/m³, particularly preferably of 150 to 300 kg/m³, even more preferably of 230 kg/m³, according to DIN EN ISO 845 and/or
- a skin density of 500 to 900 kg/m³, preferably of 600 to 800 kg/m³, particularly preferably of 700 kg/m³, according to DIN 53 479 and/or
- a skin tensile strength of 600 to 800 KPa, preferably of 724 KPa, according to DIN 53 504 and/or a foam tensile strength of 150 to 250 KPa, preferably of 206 KPa, according to DIN EN ISO 1798 and/or
- has a skin elongation of 150 to 250%, preferably of 195%, according to DIN 52 504 and/or a foam elongation of 110 to 180%, preferably of 139%, according to DIN EN ISO 1798 and/or
- has a skin tear resistance of 2 to 4 N/mm, preferably of 3.1 N/mm, and/or a foam tear resistance of 0.5 to 1.5 N/mm, preferably of 0.9 N/mm, according to DIN ISO 34-1
and/or
the silicon
- has a Shore hardness at the silicon of approximately 45 Shore 00 to approximately 90 Shore A, preferably of approximately 55 Shore 00 to approximately 50 Shore A, most preferably approximately of 70 Shore 00, according to DIN 53505 and/or
- a silicon tear strength of approximately 1 to approximately 8 N/mm², preferably of approximately 2 to approximately 6 N/mm², most preferably of approximately 2 N/mm², according to DIN 53504 *(specimen S3A)* and/or
- a silicon elongation of approximately 400 to approximately 900%, preferably of approximately 500 to approximately 700%, most preferably of approximately 600%, according to DIN 53504 *(specimen S3A)* and/or
- has a silicon tear resistance of approximately 1.2 to approximately 16.5 N/mm, preferably of approximately 3 to approximately 12 N/mm, most preferably approximately of 5 N/mm, according to DIN 53515
and/or
- is talcum-coated or fluorinated, preferably fluorinated.

4. Moulded body according to any one of Claims 2 or 3, **characterized in that** a UV protection additive and/or an antibacterial agent is contained in the polyurethane foam and/or silicon.

5. Moulded body according to any one of Claims 2 to 4, **characterized in that** the polyurethane foam is biodegradable.

6. Moulded body according to any one of Claims 2 to 5, **characterized in that** the moulded body (1) is made from polyurethane foam particles and/or polyurethane foam flakes.

7. Moulded body according to any one of the preceding claims, **characterized by** one or more of the following features:
(i) that the skull is an infant's skull,
(ii) that the moulded body (1) comprises a flattened support surface (5),
(iii) that the moulded body (1) has a solid body and/or a hollow body, preferably a solid body,
(iv) that the moulded body (1) is open and has a first end (4) and a second end (4),
(v) that a mean diameter of a cross-section (7) of the moulded body (1) decreases towards the ends.

8. Moulded body according to Claim 7, **characterized in that** the ends (4) of the moulded body (1) each have mutually detachable means for connecting the ends (4).

9. Moulded body according to any one of the preceding claims, **characterized in that** the moulded body (1) comprises a cover (19), wherein the cover (19) preferably completely or partially surrounds the moulded body (1), preferably completely surrounds it,
and/or
the cover (19) lies on the moulded body (1), partially surrounds it, and is embossed.

10. Moulded body according to Claim 9, **characterized in that** the cover (19) has a first end (20) and a second end (20), and the ends (20) of the cover (19) each have mutually detachable means for connecting the ends (20).

11. Moulded body according to any one Claims 8 or 10, **characterized in that** the detachable means are selected from the group comprising hook-and-loop fasteners, button and buttonhole, snap button and snap button receiver, hook and eye, strings, preferably hook-and-loop fasteners comprising hook-and-loop strips or hook-and-loop dots, more preferably hook-and-loop dots.

12. Moulded body according to any one of the preceding claims, **characterized in that** the moulded body (1) comprises a stiffening element (17), wherein the stiffening element (17) preferably consists of two members (23).

13. Moulded body according to any one of the preceding claims, **characterized in that** the moulded body (1) or the cover (19) has a first fastening means for attaching the moulded body (1) or the cover (19) to a base.

14. Combination comprising
a. the moulded body (1) according to Claim 13,
b. a second fastening means for attaching the moulded body (1) according to a., wherein the first and second fastening means are connectable.

15. Use of the moulded body according to any one of Claims 1 to 13 or the combination according to Claim 14 for supporting and/or positioning the skull.

## Revendications

1. Corps moulé (1) destiné à recevoir un crâne sur un plan d'appui (6), qui est essentiellement annulaire et de préférence ouvert, dans lequel
a. au moins dans une zone partielle, le contour de la section transversale (7) du corps moulé (1) comporte une demi-ellipse (8) inclinée par rapport au plan d'appui (6) et
b. au moins dans une zone partielle, le contour de la section transversale (7) du corps moulé (1) est asymétrique, dans lequel
au moins dans une zone partielle, le contour de la section transversale (7) du corps moulé (1) comporte une surface d'appui convexe, laquelle surface est la surface du corps moulé (1) qui est essentiellement dirigée vers l'intérieur, c'est-à-dire en direction du centre du corps moulé (1), ou qui est inclinée par rapport à celui-ci, et sur laquelle repose la tête, dans lequel
au moins dans une zone partielle, l'angle inclus (14) entre le plan d'appui (6) et une tangente moyenne (13) sur une partie orientée vers l'extérieur de la section transversale (11) du corps moulé (1) est supérieur à l'angle inclus (14) entre le plan d'appui (6) et une tangente moyenne (13) sur une partie orientée vers l'intérieur de la section transversale (12) du corps moulé (1), **caractérisé en ce que** le grand demi-axe (9) de la demi-ellipse (8) est incliné de 25° à 50° par rapport au plan d'appui (6) et l'angle inclus (14) sur la partie de la section transversale (11) tournée vers l'extérieur est de 65° à 90°, de préférence de 70° à 80° et l'angle inclus (14) sur la partie de la section transversale (12) tournée vers l'intérieur est inférieur ou égal à 60°, de préférence inférieur ou égal à 50°, de préférence de 30° à 42°, de manière encore plus préférée de 35° à 40°.

2. Corps moulé selon la revendication 1, **caractérisé en ce que** le corps moulé (1) comporte au moins partiellement une dureté de pénétration de 8 N à 11 N, de préférence de 9,5 N, et/ou au moins partiellement une profondeur de pénétration de 25% à 55%, de préférence de 40%, et/ou
le corps moulé (1) comprend un matériau choisi parmi un polymère synthétique, comme par exemple le silicone, les polyamides, les polyesters, les acrylates ou les polyuréthanes (PUR/PU), comme par exemple une mousse de polyuréthane, un polymère naturel, comme par exemple le caoutchouc, le liège ou les celluloses, et un polymère semi-synthétique, comme par exemple des dérivés de cellulose, ou des mélanges de ceux-ci, de préférence une mousse de silicone et/ou de polyuréthane.

3. Corps moulé selon la revendication 2, **caractérisé en ce que** la mousse de polyuréthane
- comporte une surface fermée et/ou
- une masse volumique apparente sur la mousse de 40 à 1200 kg/m³, de préférence de 150 à 1200 kg/m³, de manière particulièrement préférée de 150 à 300 kg/m³, de manière encore plus préférée de 230 kg/m³, selon la norme DIN EN ISO 845 et/ou
- une densité de la peau de 500 à 900 kg/m³, de préférence de 600 à 800 kg/m³, de préférence encore de 700 kg/m³, selon la norme DIN 53 479 et/ou
- une résistance à la traction de la peau de 600 à 800 KPa, de préférence de 724 KPa, selon la norme DIN 53 504 et/ou une résistance à la traction de la mousse de 150 à 250 KPa, de préférence de 206 KPa, selon la norme DIN EN ISO 1798 et/ou
- un allongement de la peau de 150 à 250%, de préférence de 195%, selon la norme DIN 52 504 et/ou un allongement de la mousse de 110 à 180%, de préférence de 139%, selon la norme DIN EN ISO 1798 et/ou
- une résistance à la déchirure de la peau de 2 à 4 N/mm, de préférence de 3,1 N/mm, et/ou une résistance à la déchirure de la mousse de 0,5 à 1,5 N/mm, de préférence de 0,9 N/mm selon DIN ISO 34-1
et/ou
le silicone
- une dureté Shore sur le silicone d'environ 45 Shore 00 à environ 90 Shore A, de préférence d'environ 55 Shore 00 à environ 50 Shore A, de manière tout à fait préférée d'environ 70 Shore 00, selon DIN 53505 et/ou
- une résistance à la rupture du silicone d'environ 1 à environ 8 N/mm², de préférence d'environ 2 à environ 6 N/mm², de manière tout à fait préférée d'environ 2 N/mm² selon DIN 53504 *(spécimen S3A)* et/ou
- un allongement du silicone d'environ 400 à environ 900%, de préférence d'environ 500 à environ 700%, de manière tout à fait préférée d'environ 600% selon DIN 53504 *(spécimen S3A)* et/ou
- une résistance à la déchirure du silicone d'environ 1,2 à environ 16,5 N/mm, de préférence d'environ 3 à environ 12 N/mm, de manière tout à fait préférée d'environ 5 N/mm selon DIN 53515 et/ou
- est talqué ou fluoré, de préférence fluoré.

4. Corps moulé selon l'une des revendications 2 ou 3, **caractérisé en ce qu'un** additif anti-UV et/ou un agent antibactérien est contenu dans la mousse de polyuréthane et/ou dans le silicone.

5. Corps moulé selon l'une des revendications 2 à 4, **caractérisé en ce que** la mousse de polyuréthane est biodégradable.

6. Corps moulé selon l'une des revendications 2 à 5, **caractérisé en ce que** le corps moulé (1) est fabriqué à partir de particules de mousse de polyuréthane et/ou de flocons de mousse de polyuréthane.

7. Corps moulé selon l'une des revendications précédentes, **caractérisé par une** ou plusieurs des caractéristiques suivantes :
(i) le crâne est celui d'un nourrisson,
(ii) le corps moulé (1) comprend une surface d'appui aplatie (5),
(iii) le corps moulé (1) comporte un corps plein et/ou un corps creux, de préférence un corps plein,
(iv) le corps moulé (1) est ouvert et comporte une première extrémité (4) et une seconde extrémité (4),
(v) un diamètre moyen d'une section transversale (7) du corps moulé (1) diminue en direction des extrémités.

8. Corps moulé selon la revendication 7, **caractérisé en ce que** les extrémités (4) du corps moulé (1) comportent chacune des moyens détachables les uns des autres pour relier les extrémités (4).

9. Corps moulé selon l'une des revendications précédentes, **caractérisé en ce que** le corps moulé (1) comprend un revêtement (19), de préférence
le revêtement (19) entourant complètement ou partiellement le corps moulé (1), de préférence l'entourant complètement et/ou
le revêtement (19) reposant sur le corps moulé (1), l'entourant partiellement et étant gaufré.

10. Corps moulé selon la revendication 9, **caractérisé en ce que** le revêtement (19) comporte une première extrémité (20) et une seconde extrémité (20) et les extrémités (20) du revêtement (19) comportent chacune des moyens détachables les uns des autres pour relier les extrémités (20).

11. Corps moulé selon l'une des revendications 8 ou 10, **caractérisé en ce que** les moyens détachables sont choisis dans le groupe comprenant la fermeture velcro, le bouton et la boutonnière, le bouton-pression et le récepteur de bouton-pression, le crochet et l'œillet, les cordons, de préférence la fermeture velcro comprenant une bande velcro ou un point velcro, de manière tout à fait préférée un point velcro.

12. Corps moulé selon l'une des revendications précédentes, **caractérisé en ce que** le corps moulé (1) comprend un élément de rigidification (17), l'élément de rigidification (17) étant de préférence constitué de deux membres (23).

13. Corps moulé selon l'une des revendications précédentes, **caractérisé en ce que** le corps moulé (1) ou le revêtement (19) comporte un premier moyen de fixation pour fixer le corps moulé (1) ou le revêtement (19) à un support.

14. Combinaison comprenant
a. le corps moulé (1) selon la revendication 13,
b. un second moyen de fixation pour fixer le corps moulé (1) selon a., le premier et le second moyen de fixation pouvant être reliés.

15. Utilisation du corps moulé selon l'une des revendications 1 à 13 ou de la combinaison selon la revendication 14 pour soutenir et/ou supporter le crâne.
